# EUROPÄISCHE PATENTSCHRIFT

(11) **EP 2 821 659 B1**
(45) Veröffentlichungstag und Bekanntmachung des Hinweises auf die Patenterteilung: **27.02.2019**
(21) Anmeldenummer: 14175493.7
(22) Anmeldetag: 03.07.2014
(51) Int. Cl.: F16C 29/06

(54) **Linearführung**
Linear guide
Guidage linéaire

(30) Priorität: 03.07.2013 DE 102013212996
(43) Veröffentlichungstag der Anmeldung: 07.01.2015
(73) Patentinhaber: Aktiebolaget SKF, 415 50 Göteborg (SE)
(72) Erfinder: Gransow, Anita, 97526 Sennfeld (DE); Hofmann, Joachim, 97456 Dittelbrunn (DE); Jeschka, Erwin, 97711 Maßbach (DE); Kemmer, Martin, 97440 Werneck (DE); Stahl, Erwin, 97714 Oerlenbach-Rottershausen (DE); Velde, Henryk, 97440 Werneck (DE)
(74) Vertreter: Kuhstrebe, Jochen

(56) Entgegenhaltungen:
- EP-A2- 0 124 648
- DE-A1- 3 402 346
- DE-T2- 68 918 585
- JP-A- H0 587 135
- US-A- 4 784 498

## Beschreibung

Die Erfindung betrifft eine Linearführung, umfassend einen Wagen, der in eine translatorische Richtung verschieblich auf mindestens einer Führungsschiene gelagert ist, wobei die Führungsschiene zumindest an zwei gegenüberliegenden Seiten mit je mindestens einer Laufbahn versehen ist, wobei im Wagen zugehörig zu jeder der Laufbahnen der Führungsschiene ein Kugelumlaufsystem angeordnet ist, mit dem eine Anzahl Kugeln in Eingriff zwischen eine Laufbahn im Wagen und die Laufbahn der Führungsschiene bringbar sind, wobei das Halten der Kugeln an der Laufbahn im Wagen durch ein Halteelement erfolgt, das als rahmenartige Struktur mit dem Wagen verbunden ist und das die Kugeln mit einer ersten (oberen) und einer zweiten (unteren) jeweils in translatorische Richtung verlaufenden Führungskante so zurückhält, dass sie an der Laufbahn im Wagen gehalten werden und wobei das Halteelement mit Befestigungsmitteln versehen ist, mit denen es am Wagen festgelegt werden kann und wobei die beiden Führungskanten in den Endbereichen, in translatorische Richtung betrachtet, mit Verbindungsstegen verbunden sind.

Eine solche Linearführung ist aus der EP 0 124 648 A2 bekannt. Ähnliche und andere Lösungen zeigen die DE 34 47 620 A1, die DE 34 02 346 A1, die DE 689 18 585 T2, die US 4 784 498 A, die DE 33 03 832 A1, die DE 29 45 594 A1, die DE 77 32 398 U, die JP 0319 9710 A und die JP 05087135 A.

Bei einer Linearführung der gattungsgemäßen Art kommt - insbesondere in Falle dessen, dass relativ kleine Führungen zu realisieren sind - der Halterung der Kugeln im Wagen (Führungswagen) eine wichtige Bedeutung zu. Bei der Kugelhalterung geht es um das Zurückhalten der Kugeln im Führungswagen, wenn dieser sich nicht auf der Führungsschiene (Profilschiene) befindet. Dabei geht es ausschließlich um den Vorlaufbereich (d. h. um die belastete Zone) des Kugelumlaufsystems, wo diese Funktion relevant ist. Der Bereich der Kugelumlenkung (Umlaufzone) und die Kugel-Rückführung sind zumeist als geschlossene Führungskanäle ausgebildet, so dass hier die Halterung der Kugeln keine Rolle spielt.

Wichtig wird die Funktion der Kugelhalterung, wenn der Wagen von der Führungsschiene abgezogen wird. Hier dürfen keine Kugeln aus dem Wagenkörper herausfallen. Ebenso wird die Funktion der Kugelhalterung häufig bei der Montage des Wagens erforderlich, wenn kein Platz für den Einsatz einer Montagehilfe vorhanden ist. Hier wird dann ebenfalls der Wagen von der Montageschiene abgezogen und der Wagen alleinstehend montiert.

Es wurde bereits versucht, die Kugelhalterung durch am Wagen angebrachte (angespritzte oder montierte) Haltelippen für die Kugeln sicherzustellen (z. B. durch zwei Kunststoff-Haltestege). Hier hat es sich allerdings herausgestellt, dass diese Lösung mitunter nicht dauerhaft zuverlässig arbeitet.

Eine andere Lösung stellt darauf ab, ohne Kugelhalterung zu arbeiten, wobei dann beispielsweise eine Drahthalterung vorgesehen werden kann. Dabei werden Drähte mit verschiedenen Querschnitten und unterschiedlichen Formen vorgesehen, oft werden auch in den Draht andere Funktionen integriert (z. B. Halterung der inneren Umlaufkontur im Führungswagen). Auch diese Lösung stellt keine zuverlässige Halterung der Kugeln im Wagen sicher.

Eine wiederum andere Möglichkeit stellt auf eine Kugelkette ab, mit der die Kugeln gehalten werden. Allerdings hat dies nachteilig zur Folge, dass eine Reduzierung der Tragzahl infolge erhöhter Kugelabstände in Kauf zu nehmen ist.

Es hat sich gezeigt, dass nicht nur die konstante Qualität der Bauteil (insbesondere Kunststoffteile) sondern auch eine erhöhte Qualität des Wagenkörpers (insbesondere in Form eines Stahlkörpers) zwingend erforderlich ist, um eine einwandfreie Kugelrückhalte-Funktion zu gewährleisten. Dies ist wiederum mit zusätzlichen Bearbeitungskosten verbunden, weil zusätzliche Flächen am Wagenkörper geschliffen werden müssen.

Der Erfindung liegt die **Aufgabe** zugrunde, eine Linearführung der gattungsgemäßen Art so fortzubilden, dass eine verbesserte Halterung, insbesondere eine stabile und sichere Halterung, der Kugeln gegeben ist, so dass diese auch bei demontierter Führungsschiene nicht aus dem Wagen herausfallen können. Dabei soll eine einfache und kostengünstige Herstellung möglich sein.

Die **Lösung** dieser Aufgabe durch die Erfindung ist dadurch gekennzeichnet, dass die Befestigungsmittel als streifenförmige Materialbereiche ausgebildet sind, die Bestandteil einer Clip-Verbindung sind und die aus dem Material des Halteelements ausgebildet sind, wobei sich die Befestigungsmittel von den Verbindungsstegen weg erstrecken, wobei die Verbindungsstege Umlenkelemente für die Kugeln aufweisen und wobei die Umlenkelemente als streifenförmige Materialbereiche ausgebildet sind, die sich von den Verbindungsstegen weg erstrecken.

Das Halteelement besteht gemäß einer bevorzugten Ausführungsform aus Metall, insbesondere aus Blech, und ist durch einen Stanz- und/oder Umformvorgang hergestellt. Dabei kann das Halteelement überall konstante Wandstärken aufweisen.

Eine Alternative sieht vor, dass das Halteelement aus Kunststoff besteht und durch einen Spritzgießvorgang hergestellt ist; dabei weist das Halteelement vorzugsweise unterschiedlich große Wandstärken auf.

Der Wagen besteht jedenfalls teilweise bevorzugt aus Metall, insbesondere aus Stahl.

Die Laufbahn der Führungsschiene und/oder die Laufbahn im Wagen weist bevorzugt ein gotisches Profil auf.

Mit der vorgeschlagenen Ausgestaltung wird es möglich, eine effiziente und sichere Kugelhalterung zu gewährleisten.

Um die Bearbeitungskosten am Wagenkörper zu reduzieren, wird die Kugelhalterung als separates Bauteil realisiert, nämlich in Form des genannten Halteelements.

Wird die Laufbahn in der Führungsschiene in Form eines gotischen Profils eingesetzt, laufen die Kugeln bevorzugt in einem Kontaktwinkel unter 45° zur Verbindungslinie zwischen den Laufbahnen der Führungsschiene und des Wagens.

Das Halteelement (Kugelhalterung) kann in verschiedenen Formen und aus unterschiedlichen Materialien ausgeführt werden.

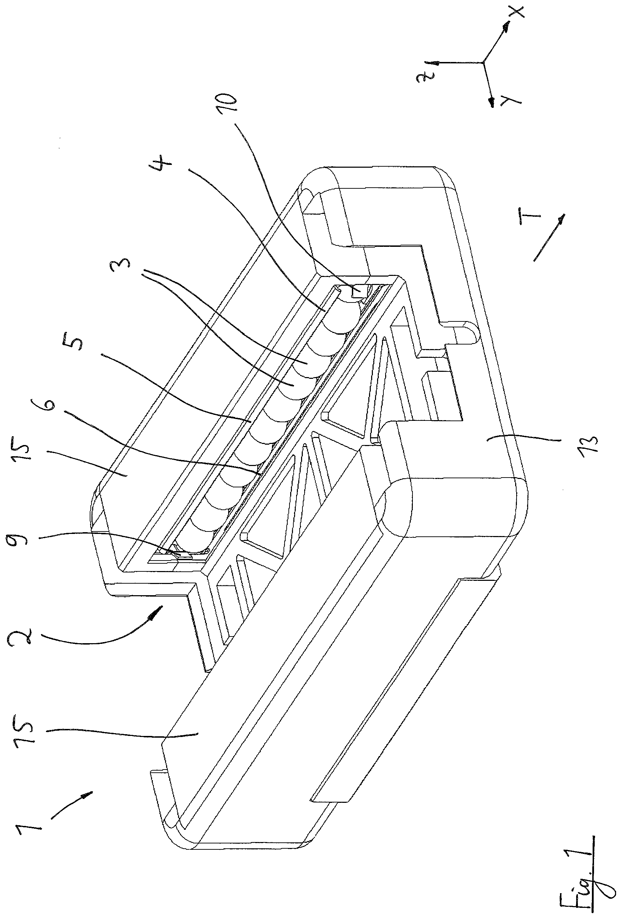

Ein wichtiger Aspekt ist bei allen Varianten die schwimmende Lagerung und die Selbstjustierung (zumindest in der Z-Richtung: Vertikale Richtung senkrecht zur Verschieberichtung des Wagens; zu der Definition der Richtungen s. Fig. 1). Das ist dadurch möglich, dass der Sitz in den verclipsten Kunststoffschalen immer größer gewählt wird, als das maximale Z-Maß der Kugelhalterung.

Die "geraden Varianten" haben auch die Möglichkeit, sich in der X-Richtung zu justieren (d. h. in translatorische Verschieberichtung).

Eine bevorzugte Ausgestaltung des Halteelements ist die in Edelstahl (in "gerader Variante"). Hier kann die Wandstärke des Gesamtbauteils konstant gehalten und die Stärke des Materials deutlich reduziert werden. Um die Einlegenut auszufüllen (Reduzierung des Spiels in der Y-Richtung: horizontale Richtung senkrecht zur translatorischen Verschieberichtung), benötigt man auf den Längsschultern einen zusätzlichen Knick, der sich aber positiv auf die Steifigkeit des Bauteils auswirkt.

Eine weitere bevorzugte Ausgestaltung ist die in Kunststoff (in "gerader Variante"): Das Halteelement gemäß dieser Ausgestaltung kann in einem einfachen Spritzwerkzeug erzeugt werden; damit können die Wanddicken und Biegeradien an verschiedenen Stellen beliebig nach Wunsch bzw. Bedarf variiert werden. Diese Ausführung ist ebenso in einem Stanzpräge-Werkzeug aus einem Weichmetall (z. B. Messing) realisierbar.

Eine weitere bevorzugte Ausführungsform ist die in Edelstahl und in einer Klemmvariante. Diese Variante ist ähnlich der "geraden Variante", jedoch anders im Material des Wagens (d. h. in der Regel im Kunststoff) festgehalten. Durch die seitlichen Haltenasen ist die Selbstjustierung in der X-Richtung (translatorische Verschieberichtung) zwar nicht gegeben, dafür kann die Position in der Y-Richtung (horizontale Richtung senkrecht zur translatorischen Verschieberichtung) variabel gestaltet werden. Hier ist auch eine gerade Ausführung der Haltekonturen im Bereich des Öffhungsmaßes möglich.

Mit der vorgeschlagenen Lösung mit separatem Bauteil (statt einer integrierten Lösung) werden verschiedene Vorteile erreicht:
Es ist ein konstantes Öffnungsmaß (Abstand senkrecht zur translatorischen Verschieberichtung) für die Kugelhalterung über die gesamte Durchbruchslänge (Erstreckung entlang der translatorischen Verschieberichtung) sichergestellt.

Das Halteelement in Form eines separaten Bauteils ist herstellungstechnisch prozesssicher herstellbar, unabhängig von dem gewählten Material (Metall oder Kunststoff).

Die Gestaltung des Umlenkelements (Umlenknase) kann zur Kugellaufbahn symmetrisch erfolgen, was in Kunststoffausführung nur bedingt machbar ist.

Die Konstruktion der Kunststoffteile (Ober- und Unterschale des Profilwagens) ist wesentlich einfacher und robuster möglich.

Auf wichtiges Kontrollmaße, auf die es bislang bei der Fertigung und der Qualitätskontrolle ankommt, kann verzichtet werden, womit die Herstellkosten wesentlich verringert werden können.

Die Qualität des "Verclipsens" der Ober- und Unterschale des Wagens hat keinen Einfluss auf die Qualität der Kugelhalterung. Dies führt zu einer höheren Robustheit im Montageprozess.

Das Befüllen des Wagens mit Kugeln im Montageprozess kann deutlich vereinfacht werden.

Einige Toleranzangaben der Funktionsmasse am Stahlkörper können entfeinert werden, womit auch die Anzahl der Bearbeitungsflächen am Stahlkörper (gezogenes Profil) des Profilwagens reduziert werden kann.

Durch die minimale und über gesamte Länge konstante Kontaktgeometrie der Kugelhalterung mit der Kugel wird die Reibung des montierten Wagens auf der Schiene reduziert.

Durch die "schwimmende" Positionierung des Halteelements in den Kunststoffteilen findet das Bauteil selbst die optimale Lage (kleinster Widerstand) und reduziert die Reibung. Die Funktion des Kugelumlaufs wird damit nicht negativ beeinflusst.

Die vorgeschlagene Lösung erlaubt auch Kugelhalterungen bei geringer "Überdeckung" (d. h. Kugeldurchmesser abzüglich des Öffnungsmaßes der Kugelhalterung).

In der Zeichnung sind Ausführungsbeispiele der Erfindung dargestellt. Es zeigen:
- Fig. 1: in perspektivischer Darstellung einen Wagen einer Linearführung in fertig montiertem Zustand,
- Fig. 2: in perspektivischer Darstellung das Oberteil des Wagens gemäß Fig. 1, wobei die Ansicht auf das Bauteil von unten dargestellt ist,
- Fig. 3: in perspektivischer Darstellung das Oberteil des Wagens gemäß Fig. 1, mit montierten Kugeln und Halteelementen,
- Fig. 4: in perspektivischer Darstellung das Unterteil des Wagens,
- Fig. 5: in perspektivischer Darstellung das Halteelement gemäß einer ersten Ausführungsform der Erfindung,
- Fig. 6: in perspektivischer Darstellung das Halteelement gemäß einer zweiten Ausführungsform der Erfindung und
- Fig. 7: in perspektivischer Darstellung das Halteelement gemäß einer dritten Ausführungsform der Erfindung.

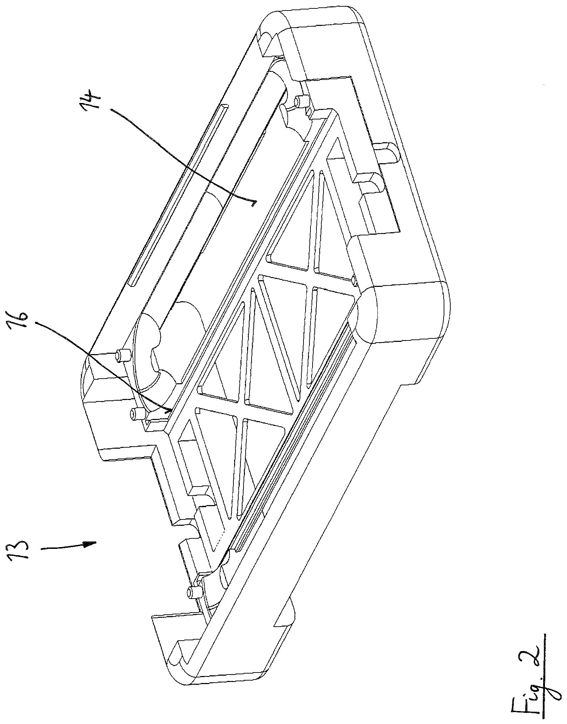

In Fig. 1 ist ein Wagen 1 einer Linearführung zu sehen. Nicht dargestellt ist eine Führungsschiene, die sich in translatorische Richtung T erstreckt, entlang der sich der Wagen 1 bewegt. Da diese Grundkonstruktion bekannt ist, braucht sie hier nicht näher erläutert zu werden. Wesentlich ist, dass der Wagen 1 in seinen beiden Seitenbereichen je ein Kugelumlaufsystem 2 aufweist. Hierbei werden Kugeln 3 entlang einer geschlossenen Bahn geführt, so dass sie in den Wälzeingriff zwischen den Laufbahnen der Führungsschiene und den Laufbahnen im Wagen 1 gelangen (die Laufbahn 14 für die Kugeln 3 ist in Fig. 2 zu erkennen).

Die Führungsschiene weist demgemäß an zwei gegenüberliegenden Seitenflächen je eine Laufbahn auf, in denen die Kugeln 3 umlaufen können. Im Wagen 1 sind gleichermaßen korrespondierende Laufbahnen 14 für die Kugeln 3 ausgebildet. Demgemäß wird der Wagen 1 relativ zur Führungsschiene durch die Kugeln 3 präzise geführt.

Damit die Kugel 3 auch bei demontierter Führungsschiene nicht aus dem Wagen 1 herausfallen können, ist vorgesehen, dass das Halten der Kugeln 3 an der Laufbahn 14 im Wagen 1 durch ein Halteelement 4 erfolgt. Dieses Halteelement 4 ist als rahmenartige Struktur ausgebildet und mit dem Wagen 1 verbunden. Die Kugeln 3 werden mittels einer ersten, oberen Führungskante 5 und einer zweiten, unteren Führungskante 6 - die jeweils in translatorische Richtung T verlaufen - zurückgehalten, so dass sie nicht aus dem Wagen 1 herausfallen können. Vielmehr werden sie an der Laufbahn 14 im Wagen 1 gehalten. Die Führungskanten 5, 6 sorgen also im montierten Zustand des Halteelements 4 für einen Umgriff der Kugeln 3 um mehr als 180°, so dass sie zuverlässig im Wagen 1 gehalten werden.

Das Halteelement 4 weist zwei Verbindungsstege 7 und 8 auf, die die obere und die untere Führungskante 5, 6 miteinander verbinden. An den Verbindungsstegen 7, 8 ist jeweils ein Umlenkelement 9, 10 angeformt. Die Umlenkelemente ("Umlenknasen") helfen beim Einführen der Kugeln aus der Umlenkzone der Kugelumlaufführung in die Laufbahn 14.

In Fig. 2 ist das noch nicht mit Kugeln befüllte Unterteil 13 des Wagens 1 dargestellt. Neben der Laufbahn 14 für die Kugeln 3 ist hier noch eine Nut 16 zu erkennen, die für die Aufnahme des Halteelements 4 vorgesehen ist.

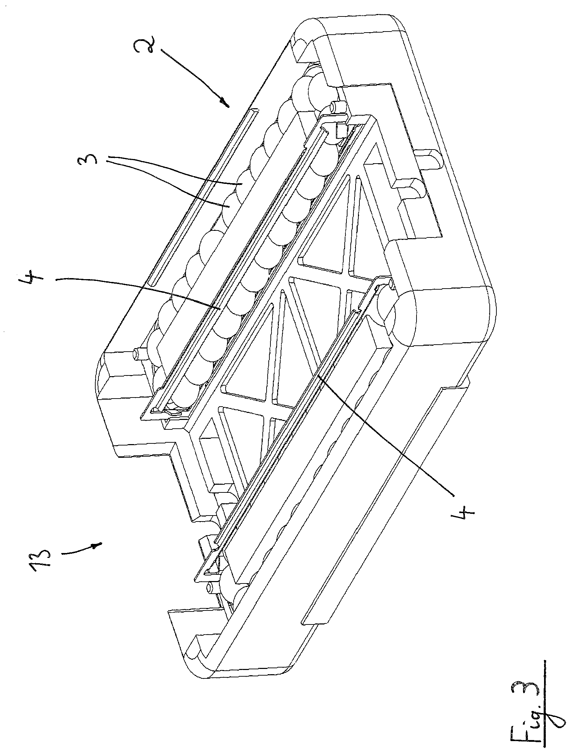

In Fig. 3 ist zu erkennen, dass die Kugeln 3 nunmehr eingefüllt wurden, so dass sich eine geschlossene Kugelbahn ergibt. Ferner ist das Halteelement 4 montiert (eingesetzt) worden.

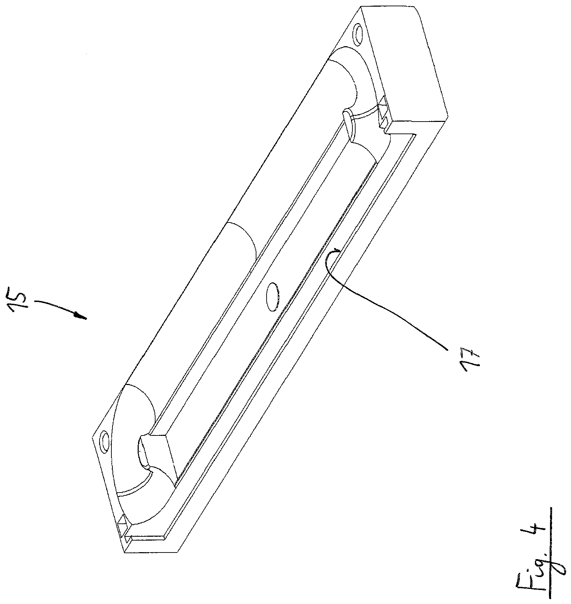

Nunmehr kann das Unterteil 15 des Wagens 1 auf die in Fig. 3 skizzierte Struktur aufgesetzt werden, das in Fig. 4 dargestellt ist. Auch das Unterteil 15 weist eine Nut 17 für das Halteelement 4 auf. Nach der Montage des Unterteils 15 ergibt sich die in Fig. 1 dargestellte Anordnung.

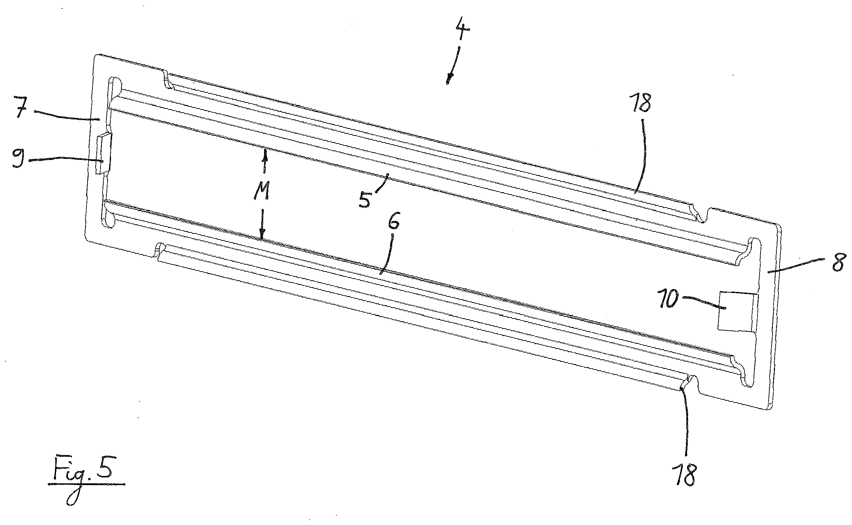

Verschiedene Ausgestaltungen des Halteelements 4 sind in den Figuren 5 bis 7 dargestellt.

Bei der Lösung nach Fig. 5 weisen die Führungskanten 5 und 6 im jeweils außenliegenden Bereich abgewinkelte Bereiche 18 auf, die zum Orientierung und Positionierung in den Aufnahmebereichen im Unterteil 15 und Oberteil 13 dienen. Das Öffnungsmaß M ist über die gesamte Erstreckung in translatorische Richtung T vorteilhaft absolut konstant. Die Führungskanten 5 und 6 weisen eine gebogene Kontur auf, die der Oberfläche der Kugeln 3 angepasst ist, so dass diese in der Lastzone sicher und ohne Kantentragen gehalten werden.

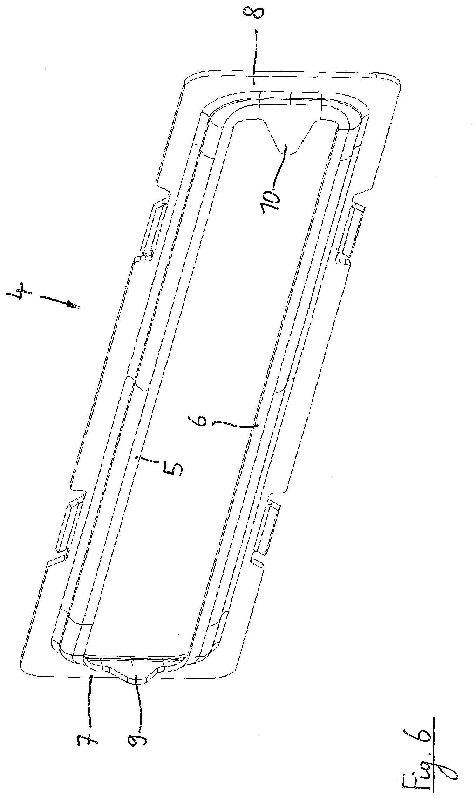

Während Fig. 5 eine Lösung als Blechbauteil (Edelstahl mit konstanter Blechstärke) zeigt, ist in Fig. 6 eine Kunststofflösung dargestellt (was aber keineswegs zwingend ist; es kann auch eine Ausführung in Blech vorgesehen sein). Hier können in einfacher Weise die Wandstärken variiert und an die jeweiligen lokalen Bedürfnisse angepasst werden. Die Umlenkelemente 9 und 10 sind hier so ausgebildet, dass sie aus den Führungskanten 5 und 6 übergehen.

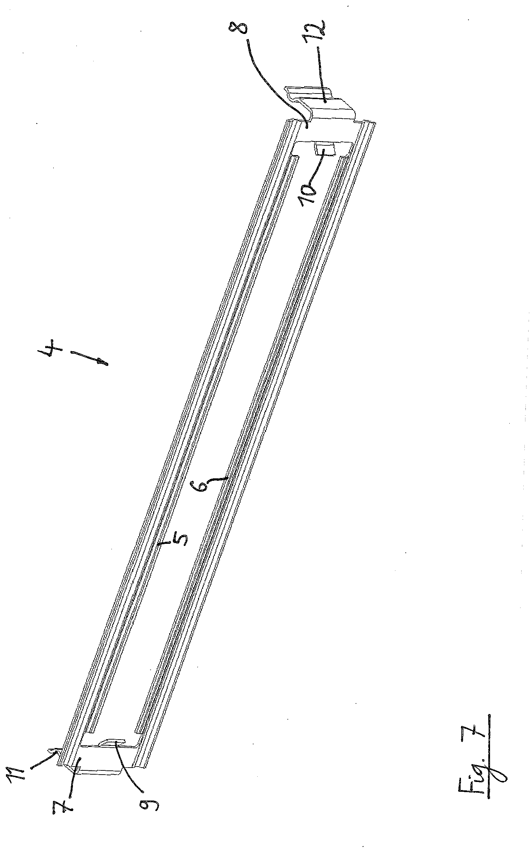

Fig. 7 zeigt eine Klemmvariante, die hier aus Edelstahl mit konstanter Wandstärke besteht. Wesentlich hier sind die Befestigungsmittel 11 und 12, die als Zungen aus dem Material des Halteelements 4 ausgebildet sind und die Bestandteil einer Clip-Verbindung sind.

Wenn die Profilführungen sehr klein ausgebildet sind, wird in der Regel - wie dargestellt - nur eine Kugelreihe pro Führungsschienen-Seite vorgesehen. Aus diesem Grund wird hier bevorzugt der Einsatz eines Vierpunktkontakts für die Kugeln vorgesehen, d. h. sowohl auf der Führungsschiene als auch am Wagen entstehen auf diese Weise in den Laufbahnen zwei Kontaktspuren. Diese Lösung ist nur möglich wenn die Laufbahn ein gotisches Profil aufweist. Die Kontaktpunkte der Kugel mit den Laufbahnen liegen vorzugsweise im 90°-Winkel zueinander. Zusätzlich handelt es sich bevorzugt um kleine Kugelgrößen (etwa im Bereich von 2 mm Durchmesser). Die vorgeschlagene Lösung erlaubt auch unter diesen Bedingungen vorteilhaft die Integration einer robusten Kugelhalterung.

### Bezugszeichenliste

- 1: Wagen
- 2: Kugelumlaufsystem
- 3: Kugel
- 4: Halteelement
- 5: erste (untere) Führungskante
- 6: zweite (obere) Führungskante
- 7: Verbindungssteg
- 8: Verbindungssteg
- 9: Umlenkelement
- 10: Umlenkelement
- 11: Befestigungsmittel
- 12: Befestigungsmittel
- 13: Oberteil des Wagens
- 14: Laufbahn
- 15: Unterteil des Wagens
- 16: Nut
- 17: Nut
- 18: abgewinkelter Bereich

- T: translatorische Richtung
- M: Öffnungsmaß

## Patentansprüche

1. Linearführung, umfassend einen Wagen (1), der in eine translatorische Richtung (T) verschieblich auf mindestens einer Führungsschiene gelagert ist, wobei die Führungsschiene zumindest an zwei gegenüberliegenden Seiten mit je mindestens einer Laufbahn versehen ist, wobei im Wagen (1) zugehörig zu jeder der Laufbahnen der Führungsschiene ein Kugelumlaufsystem (2) angeordnet ist, mit dem eine Anzahl Kugeln (3) in Eingriff zwischen eine Laufbahn im Wagen (1) und die Laufbahn der Führungsschiene bringbar sind, wobei das Halten der Kugeln (3) an der Laufbahn im Wagen (1) durch ein Halteelement (4) erfolgt, das als rahmenartige Struktur mit dem Wagen (1) verbunden ist und das die Kugeln (3) mit einer ersten und einer zweiten jeweils in translatorische Richtung (T) verlaufenden Führungskante (5, 6) so zurückhält, dass sie an der Laufbahn im Wagen (1) gehalten werden, wobei das Halteelement (4) mit Befestigungsmitteln (11, 12) versehen ist, mit denen es am Wagen (1) festgelegt werden kann und wobei die beiden Führungskanten (5, 6) in den Endbereichen, in translatorische Richtung (T) betrachtet, mit Verbindungsstegen (7, 8) verbunden sind,
**dadurch gekennzeichnet, dass**
die Befestigungsmittel (11, 12) als streifenförmige Materialbereiche ausgebildet sind, die Bestandteil einer Clip-Verbindung sind und die aus dem Material des Halteelements (4) ausgebildet sind, wobei sich die Befestigungsmittel (11, 12) von den Verbindungsstegen (7, 8) weg erstrecken, wobei die Verbindungsstege (7, 8) Umlenkelemente (9, 10) für die Kugeln (3) aufweisen und wobei die Umlenkelemente (9, 10) als streifenförmige Materialbereiche ausgebildet sind, die sich von den Verbindungsstegen (7, 8) weg erstrecken.

2. Linearführung nach Anspruch 1, **dadurch gekennzeichnet, dass** das Halteelement (4) aus Metall besteht und durch einen Stanz- und/oder Umformvorgang hergestellt ist, wobei das Halteelement (4) überall konstante Wandstärken aufweist.

3. Linearführung nach Anspruch 1, **dadurch gekennzeichnet, dass** das Halteelement (4) aus Kunststoff besteht und durch einen Spritzgießvorgang hergestellt ist, wobei das Halteelement (4) unterschiedlich große Wandstärken aufweist.

4. Linearführung nach einem der Ansprüche 1 bis 3, **dadurch gekennzeichnet, dass** der Wagen (1) aus Metall besteht.

5. Linearführung nach einem der Ansprüche 1 bis 4, **dadurch gekennzeichnet, dass** die Laufbahn der Führungsschiene und/oder die Laufbahn im Wagen (1) ein gotisches Profil aufweist.

## Claims

1. Linear guide, comprising a carriage (1) which is mounted on at least one guide rail such that it can be displaced in a translational direction (T), the guide rail being provided at least on two opposite sides with in each case at least one raceway, a recirculating ball system (2) being arranged in the carriage (1) in a manner which is associated with each of the raceways of the guide rail, by way of which recirculating ball system (2) a number of balls (3) can be brought into engagement between a raceway in the carriage (1) and the raceway of the guide rail, the balls (3) being held on the raceway in the carriage (1) by way of a holding element (4) which is connected as a frame-like structure to the carriage (1) and which retains the balls (3) by way of a first and a second guide edge (5, 6) which run in each case in the translational direction (T), in such a way that the said balls (3) are held on the raceway in the carriage (1), the holding element (4) being provided with fastening means (11, 12), by way of which it can be fixed on the carriage (1), and the two guide edges (5, 6) being connected to connecting webs (7, 8) in the end regions, as viewed in the translational direction (T), **characterized in that** the fastening means (11, 12) are configured as strip-shaped material regions which are a constituent part of a clip connection and which are configured from the material of the holding element (4), the fastening means (11, 12) extending away from the connecting webs (7, 8), the connecting webs (7, 8) having deflecting elements (9, 10) for the balls (3), and the deflecting elements (9, 10) being configured as strip-shaped material regions which extend away from the connecting webs (7, 8).

2. Linear guide according to Claim 1, **characterized in that** the holding element (4) consists of metal and is produced by way of a punching and/or forming operation, the holding element (4) having constant wall thicknesses throughout.

3. Linear guide according to Claim 1, **characterized in that** the holding element (4) consists of plastic and is produced by way of an injection moulding operation, the holding element (4) having wall thicknesses of different magnitude.

4. Linear guide according to one of Claims 1 to 3, **characterized in that** the carriage (1) consists of metal.

5. Linear guide according to one of Claims 1 to 4, **characterized in that** the raceway of the guide rail and/or the raceway in the carriage (1) have/has an ogival profile.

## Revendications

1. Guidage linéaire, comportant un chariot (1) qui est monté de manière mobile sur au moins un rail de guidage dans une direction de translation (T), le rail de guidage étant doté, au moins sur deux côtés opposés, d'au moins un chemin de roulement respectif, un système de recirculation de billes (2) étant disposé dans le chariot (1) de manière associée à chacun des chemins de roulement du rail de guidage, système à l'aide duquel un certain nombre de billes (3) peuvent être amenées en contact entre un chemin de roulement dans le chariot (1) et le chemin de roulement du rail de guidage, la retenue des billes (3) sur le chemin de roulement dans le chariot (1) s'effectuant au moyen d'un élément de retenue (4) qui est relié au chariot (1) en tant que structure en forme de cadre et qui retient les billes (3) à l'aide d'un premier et d'un deuxième bord de guidage (5, 6) s'étendant respectivement dans la direction de translation (T), de telle sorte qu'elles soient retenues sur le chemin de roulement dans le chariot (1), l'élément de retenue (4) étant doté de moyens de fixation (11, 12) à l'aide desquels il peut être fixé sur le chariot (1), et les deux bords de guidage (5, 6) étant dotés de nervures de liaison (7, 8) dans les régions d'extrémité, considéré dans la direction de translation (T),
**caractérisé en ce que**
les moyens de fixation (11, 12) sont réalisés sous forme de régions de matériau en forme de bandes, lesquelles font partie d'une liaison par encliquetage et sont formées à partir du matériau de l'élément de retenue (4), les moyens de fixation (11, 12) s'étendant à l'écart des nervures de liaison (7, 8), les nervures de liaison (7, 8) comprenant des éléments de déviation (9, 10) pour les billes (3) et les éléments de déviation (9, 10) étant réalisés sous forme de régions de matériau en forme de bandes, lesquelles s'étendent à l'écart des nervures de liaison (7, 8).

2. Guidage linéaire selon la revendication 1, **caractérisé en ce que** l'élément de retenue (4) est constitué de métal et est fabriqué par une opération d'estampage et/ou de façonnage, l'élément de retenue (4) présentant partout des épaisseurs de paroi constantes.

3. Guidage linéaire selon la revendication 1, **caractérisé en ce que** l'élément de retenue (4) est constitué de matière synthétique et est fabriqué par une opération de moulage par injection, l'élément de retenue (4) présentant des épaisseurs de paroi de dimensions différentes.

4. Guidage linéaire selon l'une quelconque des revendications 1 à 3, **caractérisé en ce que** le chariot (1) est constitué de métal.

5. Guidage linéaire selon l'une quelconque des revendications 1 à 4, **caractérisé en ce que** le chemin de roulement du rail de guidage et/ou le chemin de roulement dans le chariot (1) présentent un profil gothique.
